# EUROPEAN PATENT SPECIFICATION

(11) **EP 1 167 136 B1**
(45) Date of publication and mention of the grant of the patent: **22.09.2004**
(21) Application number: 01305386.3
(22) Date of filing: 21.06.2001
(51) Int. Cl.: B60S 1/34

(54) **Improvements relating to windscreen wipers**
Verbesserungen an Scheibenwischern
Améliorations apportées à des essuie-glaces

(30) Priority: 24.06.2000 GB 0015464
(43) Date of publication of application: 02.01.2002
(73) Proprietor: Trico Products Corporation, Rochester Hills, MI 48309 (US)
(72) Inventor: Matthews, Michael, Pontywaun, Crosskeys, Newport NP1 7FZ (GB)
(74) Representative: Britter, Keith Palmer

(56) References cited:
- EP-A- 0 579 550
- DE-A- 3 829 466
- FR-A- 2 724 897

## Description

Conventionally, a windscreen wiper support head is pivotally mounted to a drive head, but is held in a lowered condition by a spring. It is necessary to provide mounting means between the two parts for attachment to the ends of the spring.

Various types of mounting means have been proposed in the past. Some of these are complex. Others are simple, but may be subject to fatigue leading to breakage.

EP-A-0579550 discloses a support head of a windscreen wiper assembly incorporating a mounting arrangement for a location pin for holding the end of a spring which biases the pivoted support head of the windscreen wiper assembly into a lowered condition, the support head having a top face and two side walls, the mounting arrangement comprising inturned arms from the two side walls of the head, the arms terminating in upturned bearing walls to receive the location pin.

It is an object of this invention to provide a simpler and more robust mounting means for the spring on the support head than that provided by the prior art above.

Accordingly, the present invention is characterised from the known support head referenced above, in that the bearing walls incorporate notches to locate the pin in a desired position.

Preferably, each notch will open into a face of the bearing wall which is directed towards the base of the support head. The notch could be keyhole-shaped to enable the pin to be snap-fitted into place.

One or both of the side walls of the head could incorporate a hole for receipt of an end of the pin, to provide added stability.

The invention may be performed in various ways and preferred embodiments thereof will now be described by way of example, with reference to the accompanying drawings, in which:-
Figure 1 illustrates a side view of part of a windscreen wiper support head of this invention;
Figure 2 is a vertical section through the support head of Figure 1;
Figure 3 is an enlargement of part of the assembly in Figures 1 and 2, illustrating the location of the hooked end of a spring;
Figure 4 is a side view illustration of an alternative wiper support head construction not in accordance with the invention but included for comparison purposes; and
Figure 5 shows an alternative wiper support head construction of the invention.

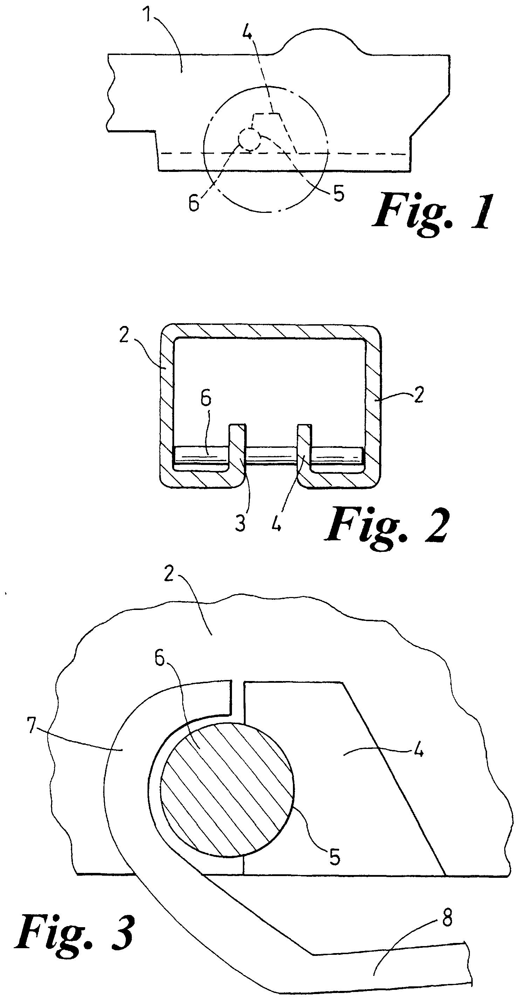

As shown in Figures 1 to 3, a windscreen wiper support head 1 has a pair of side walls 2 defining inturned arms 3 terminating in upturned bearing walls 4 located at the position shown in dashed outline in Figure 1. The bearing walls 4 each incorporate a notch 5 at their outer faces into which can be located a pin 6 in the manner indicated in Figure 3. The hooked end 7 of a spring 8 can then be located over the pin. The pressure of the spring holds the pin in place in the notch 5, enabling the pin also to act as a location anchorage for the hooked end 7 of the spring.

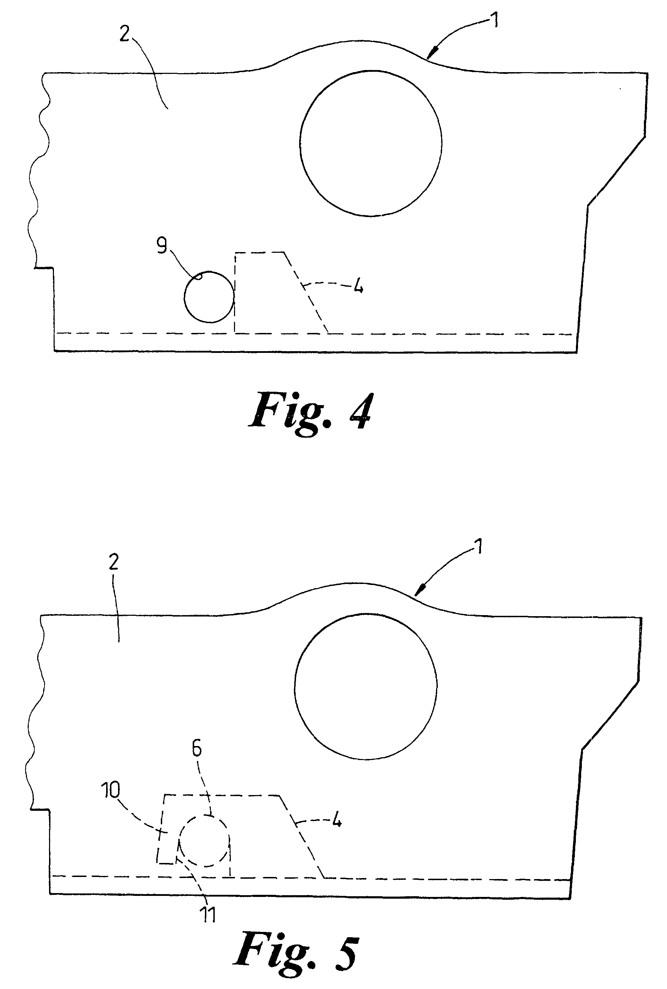

The arrangement shown in Figure 4 is included for comparison purposes and does not fall within the scope of the invention, in that, the bearing walls 4 are plain in configuration and do not necessarily incorporate a notch 5. However, holes 9 are provided in the side walls 2 to allow a pin 6 to be fed through, with the ends of the pin being supported in those holes in the side walls 2. The bearing walls 4 provide added support for the pin 6 against the pressure exerted by the spring 8.

As shown in Figure 5, the bearing walls 4 could be arranged to have a forwardly extending portion 10 defining a keyhole-shaped notch 11. A pin 6 can then be introduced from below and pressed as a snap-fit into the keyhole-shaped notch 11.

## Claims

1. A support head (1) of a windscreen wiper assembly incorporating a mounting arrangement for a location pin (6) for holding the end of a spring (8) which biases the pivoted support head of the windscreen wiper assembly into a lowered condition, the support head (1) having a top face and two side walls (2), the mounting arrangement comprising inturned arms (3) from the two side walls (2) of the head (1), the arms (3) terminating in upturned bearing walls (4) to receive the location pin (6),
**characterised in that** the bearing walls (4) incorporate notches (5) to locate the pin (6) in a desired position.

2. A support head (1) according to claim 1, wherein each notch (5) opens into a face of the bearing walls (4) which is directed towards the base of the support head (1).

3. A support head (1) according to claim 2, wherein the notch (11) is keyhole-shaped, to enable the pin (6) to be snap-fitted into place.

4. A support head (1) according to claim 1, 2 or 3, wherein one or both of the side walls (2) of the head (1) incorporates a hole (9) for receipt of an end of the pin (6).

## Patentansprüche

1. Stützkopf (1) einer Scheibenwischeranordnung mit einer Befestigungsanordnung für einen Fixierzapfen (6) zum Halten des Endes einer Feder (8), welche den schwenkbar gelagerten Stützkopf der Scheibenwischeranordnung in einen abgesenkten Zustand vorspannt, wobei der Stützkopf (1) eine Oberseite und zwei Seitenwände (2) hat, die Befestigungsanordnung von den zwei Seitenwänden (2) des Kopfes (1) nach innen gerichtete Arme (3) aufweist, wobei die Arme (3) in nach oben gerichteten Auflagerwänden (4) münden, um den Fixierzapfen (6) aufzunehmen, **dadurch gekennzeichnet, dass** die Auflagerwände (4) Aussparungen (5) enthalten, um den Zapfen (6) in einer gewünschten Position anzuordnen.

2. Stützkopf (1) nach Anspruch 1, wobei jede Aussparung (5) In einer Fläche der Auflagerwände (4) mündet, weiche in Richtung der Basis des Stützkopfes (1) gerichtet ist.

3. Stützkopf (1) nach Anspruch 2, wobei die Aussparung (11) schlüssellochförmig ist, so dass der Zapfen (6) in seiner Position eingerastet werden kann.

4. Stützkopf (1) nach Anspruch 1, 2 oder 3, wobei eine oder beide Seitenwände (2) des Kopfes (1) ein Loch (9) zur Aufnahme eines Endes des Zapfens (6) enthält/enthalten.

## Revendications

1. Tête de support (1) d'un ensemble d'essuie-glace incorporant un dispositif de montage destinée à une broche de positionnement (6) pour maintenir l'extrémité d'un ressort (8) qui influe sur la tête de support pivotante de l'ensemble d'essuie-glace pour être en position abaissée, la tête de support (1) ayant un côté supérieur et deux parois latérales (2), le dispositif de montage comprenant des bras à revers (3) à partir des deux parois latérales (2) de la tête (1), les bras (3) se terminant en parois d'appui remontées (4) pour recevoir la broche de positionnement (6),
**caractérisée en ce que** les parois d'appui (4) incorporent des encoches (S) pour positionner la broche (6) dans une position adaptée.

2. Tête de support (1) selon la revendication 1, dans laquelle chaque encoche (5) ouvre sur un côté des parois d'appui (4) qui est orienté vers la base de la tête de support (1).

3. Tête de support (1) selon la revendication 2, dans laquelle l'encoche (11) est en forme de trou de serrure, pour permettre la mise en place par pression de la broche (6).

4. Tête de support (1) selon la revendication 1, 2 ou 3, dans laquelle l'une ou les deux parois latérales (2) de la tête (1) incorpore(nt) un trou (9) pour recevoir une extrémité de la broche (6).
